Europäisches Patentamt

European Patent Office

Office européen des brevets

(11) Veröffentlichungsnummer: **0 453 905 A2**

# EUROPÄISCHE PATENTANMELDUNG

(21) Anmeldenummer: 91105854.3

(51) Int. Cl.5: **G05D 1/02**

(22) Anmeldetag: **12.04.91**

(30) Priorität: **26.04.90 DE 4013341**

(43) Veröffentlichungstag der Anmeldung:
**30.10.91 Patentblatt 91/44**

(84) Benannte Vertragsstaaten:
**DE FR GB NL**

(71) Anmelder: **ANSCHÜTZ & CO. GmbH**
**Postfach 1166**
**W-2300 Kiel 1(DE)**

(72) Erfinder: **Spitzmann, Kurt, Dr.**
**Osterwisch 4**
**W-2300 Molfsee(DE)**

(54) **Verfahren und Vorrichtung zur Ermittlung der Lage eines relativ zu einem Hinernis bewegten Objekts.**

(57) Um die relative Lage eines Gegenstandes relativ zu einem anderen Gegenstand zu bestimmen, benötigt man die Entfernung der beiden Gegenstände an einem Punkt und einem Winkel. Dieser Winkel kann sehr genau in einem mittleren Entfernungsbereich $\leq$ 10 m) mittels Ultraschall dadurch bestimmt werden, indem man das Echo eines von einem Ultraschallsender ausgehenden Schallimpulses durch zwei Ultraschallempfänger hinsichtlich der Phasendifferenz der empfangenen Echosignale auswertet. Die Entfernung wird dabei in bekannter Weise durch eine Laufzeitmessung ermittelt.

Fig. 1

Die Erfindung betrifft Verfahren zur Ermittlung der Lage eines relativ zu einem Hindernis bewegten Objekts durch Messen von gegenseitigem Abstand und Winkellage unter Verwendung von Ultraschall sowie Vorrichtungen zur Durchführung der Verfahren.

Lageermittlungseinrichtungen werden insbesondere für autonom bewegliche, führerlose Rad- und Kettenfahrzeuge benötigt. Diese Fahrzeuge werden vornehmlich in Gebäuden zu verschiedenen Zwecken eingesetzt. Sie dienen z.B. der Wartung und Reinigung von Maschinen, dem Transport oder der Reinigung von Bodenarealen. Damit sich die Fahrzeuge zielgerichtet bewegen können, müssen sie ihre Umwelt durch Sensoren erfassen. Für mittlere Entfernungen (≦ 10 m) eignen sich hierfür besondere Ultraschallsensoren, da diese sich durch ein von der Oberflächenbeschaffenheit relativ unabhängiges Reflexionsverhalten auszeichnen.

Die Auswertung der Ultraschallsignale erfolgt dabei in bekannter Weise nach dem Laufzeitverfahren, bei welchem über eine Messung der Zeit zwischen Aussendung des Schallimpulses bis zu seiner Detektion als Schallecho die Abstände zu vorhandenen Hindernissen gemessen werden. Dabei hat die Strahlungskeule des Ultraschallsenders nur einen sehr kleinen Öffnungswinkel, um brauchbare Messungen erhalten zu können. Damit eine Lageermittlungseinrichtung alle zur Lageermittlung benötigten Daten liefern kann, müssen mehrere Abstandmessungen mit großer Meßbasis (Entfernung Sender-Empfänger) durchgeführt werden. Aus den durch die Messungen gewonnenen Abständen kann man durch verschiedene Rechenoperationen die relative Ausrichtung des Fahrzeugs zu einem relativ großen Hindernis (z.B. eine Wand) ermitteln, indem man sowohl den Abstand an einer Stelle als auch den dazugehörenden Winkel bestimmt. Erst wenn in dem Fahrzeug diese Daten zur Verfügung stehen, kann das führerlose Fahrzeug die notwendigen Steuerkorrekturen durchführen, um einen gewünschten Kurs zu folgen und Kollisionen zu vermeiden.

Die so zum Zwecke der autonomen Navigation bewirkte Ermittlung eines Winkels aus der Differenz zweier Abstandmessungen ist recht ungenau, da diese Differenzbildung mit einer großen Meßunsicherheit behaftet ist. Auch wird sowohl eine relativ große Meßbasis zwischen zwei Abstandsmessungen als auch ein recht großes Hindernis für die Ausrichtung des Fahrzeugs benötigt.

Die große Meßbasis hat den weiteren Nachteil, daß man nicht sicher sein kann, ob die beiden gemessenen Abstände zu einem oder aber zu mehreren Hindernissen gehören. Deshalb benötigen alle nach diesem Verfahren arbeitenden Lageermittlungseinrichtungen logische Vergleichsoperationen, um diese Fehler möglichst zu eliminieren.

Um dieses einigermaßen sicher tun zu können, führt man das Fahrzeug an Wänden in einem festen Abstand entlang (WO 87/02483).

Diese, die Einsatzmöglichkeit des Fahrzeugs stark einschränkende Vorgehensweise zur Lageorientierung muß vermieden werden, wenn das Fahrzeug flexibel eingesetzt werden soll.

Aufgabe der Erfindung ist es ein Verfahren zur Ermittlung der Lage eines relativ zu einem Hindernis bewegten Objektes zu schaffen, das eine sehr genaue und schnelle Messung von gegenseitigem Abstand und Winkellage ermöglicht, mit einer kleinen Meßbasis auskommt und das deshalb einen flexiblen Einsatz des Objektes, beispielsweise eines Fahrzeugs, ermöglicht.

Ausgehend von einem Verfahren, bei dem die Abstandsmessung nach dem Laufzeitverfahren mittels Ultraschall erfolgt, wird diese Aufgabe gemäß der vorliegenden Erfindung durch ein Verfahren gelöst, welches im kennzeichnenden Teil des Anspruchs 1 beschrieben ist.

Durch die Phasendifferenz-Messung in Kombination mit der Laufzeitmessung ist es möglich, eine ausreichend genaue Bestimmung des Abstandes und der Winkellage relativ zu einem Hindernis bei kleiner Meßbasis bei nur einem ausgestrahlten Ultraschallimpuls zu erhalten. Die Winkelermittlung erfolgt separat zur Abstandsmessung, wodurch sich eine wesentlich höhere Meßgenauigkeit und insbesondere auch Meßsicherheit realisieren läßt, als dies nach der bekannten Differenzbildung aus Abstandsmessungen möglich ist. Die Phasendifferenzmessung wird nach dem Verfahren des Anspruchs 1 zwischen den beiden Echo-Signalen gemessen.

Besonders vorteilhaft ist der Einsatz des Verfahrens nach der Erfindung in autonom beweglichen, führerlosen Fahrzeugen, die dadurch ein sicheres Navigationssystem für den mittleren Entfernungsbereich (≦ 10 m) erhalten. Dabei kann eine Verknüpfung mit weiteren Sensorsignalen erfolgen (z.B. Laufwegmessung).

Damit ist man mit den Verfahren nach der Erfindung in der Lage, eine zweidimensionale Lageermittlung relativ zu einem Hindernis durchzuführen. Durch das erfindungsgemäße Meßverfahren ist eine große konstruktive Freiheit hinsichtlich der Anordnung von Ultraschallsender und -empfänger gegeben. Im Gegensatz zu Einrichtungen, die andere Meßverfahren nutzen, liegt die Entfernung zwischen den Ultraschallempfängern dabei vorteilhafterweise im cm-Bereich.

Eine oder mehrere Ultraschall-Lageermittlungseinrichtungen können an einem autonombeweglichem, führerlosen Fahrzeug angebracht werden, wobei die Anbringung nicht nur starr sondern auch vorteilhaft heb-, dreh- und/oder verschiebbar am Fahrzeug erfolgen kann.

Indem man die nach der Phasendifferenz-Messung und dem Laufzeitverfahren ermittelten Daten direkt in ein Leitsystem zur Steuerung des Fahrzeugs eingibt, erhält man sehr kurze Reaktionszeiten für das Fahrzeug. Wenn man hingegen die Daten einem Rechner zur Verfügung stellt, kann man die Flexililtät des Einsatzes der Einrichtung stark vergrößern.

Die Erfindung wird im folgenden anhand eines Ausführungsbeispiels, unter Bezugnahme auf die beiliegenden Figuren, näher erläutert, wobei das nachfolgende Beispiel keinen abschließenden Charakter für die Erfindung hat und weitere vorteilhafte Ausgestaltungen der Erfindung beinhaltet.

Es sind zu sehen in

Figur 1    die Wirkungsweise der Ultraschall-Lageermittlungseinrichtung sowie ein schematischer Aufbau der Auswerteeinrichtung;

Figur 2    ein Fahrzeug zur Durchführung der Verfahren mit beweglicher Lageermittlungseinrichtung in seitlicher Ansicht;

Figur 2a    die Anbringung des Ultraschallsenders und der beiden Ultraschallempfänger in einem Gehäuse oberhalb des Fahrzeugs für eine zweidimensionale Lageermittlung;

Figur 2b    die Anbringung des Ultraschallsenders und vier Ultraschallempfängern in einem Gehäuse oberhalb des Fahrzeugs für eine dreidimensionale Lageermittlung;

Figur 3a    die Darstellung des Erfassungsbereichs der Ultraschall-Lageermittlungseinrichtung;

Figur 3b    eine alternative Anbringung der Ultraschall-Lageermittlungseinrichtung;

Figur 4    ein weiteres Fahrzeug zur Durchführung der Verfahren mit starrer Lageermittlungseinrichtung in seitlicher Ansicht;

Figur 5    eine Darstellung der Erfassungsbereiche der Einrichtungen an dem Fahrzeug aus Figur 4.

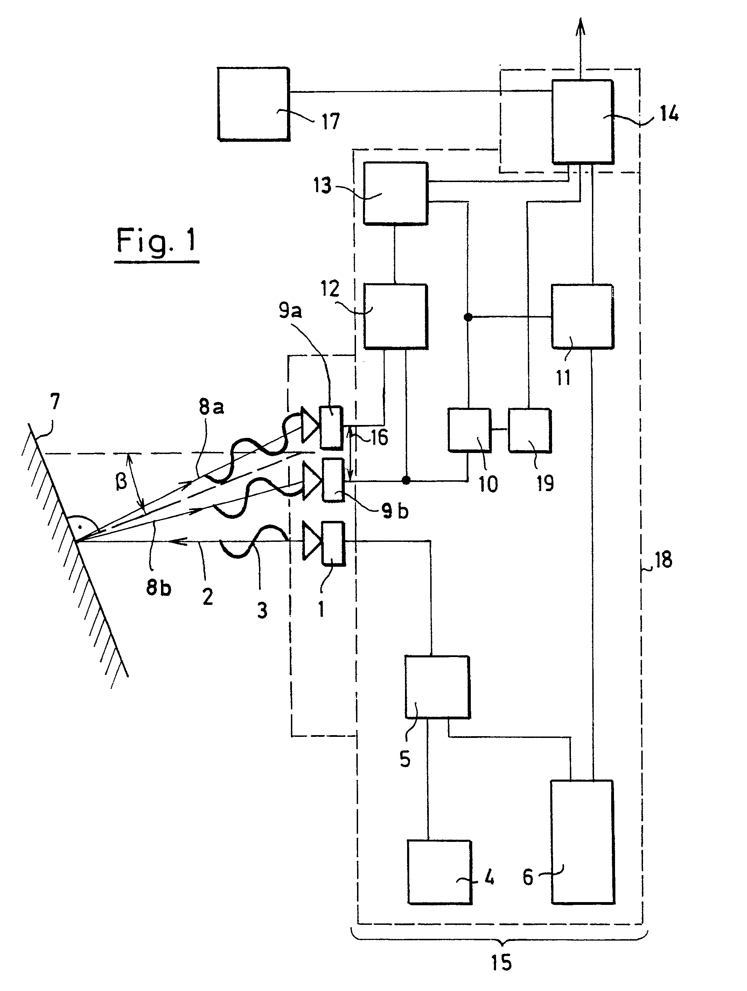

In der Figur 1 ist gezeigt, auf welche Weise man den Abstand und den Winkel ß der Lageermittlungseinrichtung (15) zu einem Hindernis (7) bestimmt. Die Lageermittlungseinrichtung (15) kann in einem automon beweglichen, führerlosen Fahrzeug eingebaut sein. Sie kann aber auch von einer festen Meßposition aus bewegte bzw. bewegliche Objekte bezüglich Winkel und Abstand vermessen. Ein Leitsystem kann dann gegebenenfalls diese Objekte gezielt beeinflussen. Von dem Ultraschallsender (1) wird ein Ultraschallimpuls (2) in einer Strahlungskeule mit einem typischen Öffnungswinkel von ca. 90° (± 45°) ausgesandt. Der Ultraschallimpuls (2) hat eine Länge von 20 Perioden (3). Diese Periodenanzahl ergibt sich aus der Periodenanzahl der Hochfrequenz des Frequenzgenerators (4) mit typischerweise ca. 40 KHz innerhalb einer Fensteröffnungszeit (auch BURST-Zeit genannt) von typischerweise ca. 0,5 ms. Um diese Fensteröffnungszeit für die Hochfrequenz zu erhalten, legt man das Hochfrequenzsignal des Frequenzgenerators (4) auf einen Eingang eines UND-Gatters (5). Auf den anderen Eingang des UND-Gatters (5) wird der Ausgang eines Fenstergenerators (6) gelegt. Der Fenstergenerator (6) liefert ein Signal, welches das UND-Gatter (5) für ca. 0,5 ms öffnet und für typischerweise ca. 0,1 sec. Schließt. Der Ausgang des UND-Gatters (5) ist mit dem Ultraschallsender (1) verbunden. Erst wenn der Fenstergenerator (6) mit seinem Signal das UND-Gatter (5) für ca. 0,5 ms öffnet, gelangt das Hochfrequenzsignal des Frequenzgenerators (4) auf den Ultraschallsender (1). Zwischen zwei Fensteröffnungszeiten bleibt der Ultrschallsender (1) stumm, da das Hochfrequenzsignal des Frequenzgenerators (4) nicht durch das UND-Gatter (5) kommt. Der Ultraschallsender (1) strahlt mit ca. 120 dB Schalldruck, wodurch sich eine sinnvolle Anwendung der Lageermittlungseinrichtung (15) bis zu einer Entfernung zum Hindernis (7) von ca. 6 m bei einem Öffnungswinkel der Strahlungskeule von ca. ± 45° ergibt.

Der ausgesandte Ultraschallimpuls (2) wird an einem Hindernis (7) reflektiert und die Reflexion als Ultraschallechos (8a,8b) von zwei Ultraschallempfängern (9a,9b) empfangen.

Der dem Ultraschallsender (1) am nächsten gelegene Ultraschallempfänger (9b) ist mit einem Echodetektor (10) verbunden. Dieser Echodetektor (10) erkennt das Vorliegen eines Echos, d.h. der Echodetektor (10) erzeugt ein Signal, wenn es zu einem Empfang des ausgesandten Ultraschallimpulses (2) kommt. Dieses Signal des Echodetektors (10) stoppt einen Laufzeitzähler (11), welcher zusammen mit dem Echodetektor (10) durch den Fenstergenerator (6) am Anfang der BURST-Zeit gestartet wurde. Indem man die so ermittelte Laufzeit mit der Schallgeschwindigkeit multipliziert, erhält man die vom Schall zurückgelegte gesamte Wegstrecke. Dies ist das bekannte Echoverfahren, bei welchem aus der Laufzeit vom Beginn des Sendeimpulses (2) bis zum Beginn des Empfängerimpulses (8a,8b) auf den Abstand zu einem Hindernis (7) geschlossen wird.

Den benötigten Winkel ß kann man dadurch bestimmen, daß man die beiden Echosignale (8a,8b) von den Ultraschallempfängern (9a,9b) auf eine Phasenauswerteeinrichtung (12) führt, welche die Phasenlage und damit die Phasendifferenz der beiden Wellenzüge (8a,8b) ermittelt. Die Phasenverschiebung φ ergibt sich aus den unterschiedlichen Laufzeiten des Ultraschallimpulses (2) vom Ultraschallsender (1) von einem Hindernis (7), also der beiden Ultraschallechos (8a,8b) zu den beiden Ultraschallempfängern (9a,9b). Dabei darf die Meßbasis (16) und damit die Entfernung zwischen den beiden Ultraschallempfänger (9a,9b) relativ gering (einige cm) sein. Dies resultiert aus der Verwendung der Hochfrequenz für den Ultraschallsender (1). Da man die Basislänge (16) zwischen den beiden Ultraschallempfängern (9a,9b), die beiden Entfernungen zwischen dem Ultraschallsender (1) und den beiden Ultraschallsendern (9a,9b) (beide Entfernungen sind durch den konkreten konstruktiven Aufbau bereits festgelegt), die vom Schall zurückgelegten Wegstrecken und die Phasendifferenz zwischen den beiden Ultraschallechos (8a,8b) bei jeder Messung kennt, kann man den Abstand eines Hindernisses (7) zur Lageerkennungseinrichtung (15) nach bekannten mathematischen Methoden bestimmen. Der dadurch ermittelte Winkel ß zeichnet sich trotz der relativ kurzen Meßbasis (16) durch eine wesentlich höhere Meßgenauigkeit aus, als dies nach der bekannten Differenzbildung in der Regel möglich ist.

Da der Ultraschallsender (1) und die Ultraschallempfänger (9a,9b) relativ dicht beieinander sind, kann man davon ausgehen, daß der Winkel zwischen ausgesandtem Ultraschallimpuls (2) und den beiden reflektierten Ultraschallechos (8a,8b) gegen Null strebt. (In der Zeichnung ist dieser Winkel aus Gründen der Anschaulichkeit sehr stark vergrößert gezeichnet), wenngleich er nie Null wird. Diese geometrischen Verhältnisse erlauben eine relativ einfache mathematische Auswertung der Messungen, welche durch entsprechende Korrekturzuschläge im Computer (14) insbesondere für kurze Entfernungen weiter verbessert werden können. Diese Korrekturzuschläge können dabei in einem Dauerspeicher des Computers (14) abgelegt sein und vom Computer (14) nach jeder Entfernungsbestimmung entsprechend der ermittelten Entfernung mit diesem zu einem auszugebenden Wert verknüpft werden, um eine präzise Steuerung zu ermöglichen. Man kann aber auch eine Korrekturformel bestimmen, mit welcher man nach Vorgabe der vorher ermittelten Entfernung eine entsprechend korrigierte Entfernung errechnet.

Der Ultraschallimpuls (2), der im rechten Winkel auf ein Hindernis (7) trifft, wird reflektiert und die beiden Ultraschallechos (8a,8b) von den Ultraschallempfängern (9a,9b) empfangen. Durch die Entfernung (16) der beiden Ultraschallempfänger (9a,9b) zueinander und dem Auftreffwinkel ß sind die beiden Ultraschallechos (8a,8b) zueinander verschoben. Durch den Winkel ß ist das eine Ultraschallecho (8a) relativ zum anderen Ultraschallecho (8b) bei dem Empfang durch die Ultraschallempfänger (9a,9b) um eine Phase φ verschoben. Der zu messende Einfallswinkel ß der reflektierten Ultraschallimpulses (2) ergibt sich somit zu

$$ß = \phi \cdot \underline{d}$$

mit

ß    - Einfallswinkel des Ultraschallimpulses
φ    - Phase
     - Wellenlänge des verwendeten Ultraschalls
d    - Entfernung (16) zwischen den Ultraschallempfängern (9a,9b)

Die zu ermittelnde Entfernung a zum Hindernis errechnet sich aus

$$a = \tfrac{1}{2} v t$$

mit

a    - Abstand zum Hindernis
v    - Schallgeschwindigkeit im Medium zwischen Hindernis (7) und Ultraschallsender/-empfängern
t    - Laufzeit zwischen Sendung und Empfang

Die Lageerkennungseinrichtung (15) dient somit der Ermittlung von Abstand und Winkel der Einrichtung (15) zu einem Hindernis (7) unter Zuhilfenahme von Ultraschallimpulsen (2), wobei die Ermittlung des Abstandes als auch die Winkelmessung mit nur einem ausgesandten Ultraschallimpuls (2) eines Ultraschallsenders (1) erfolgt. Während der Abstand durch das bekannte Laufzeitverfahren ermittelt wird, erfolgt die Winkelmessung durch eine Auswertung der von den beiden Ultraschallempfängern (9a,9b) empfangenen Ultraschallechos (8a,8b) eines einzigen gesandten Ultraschallimpulses (2) hinsichtlich ihrer Phasendifferenz. Vom Computer (14) kann ein Zeitdiskriminator (19) dafür sorgen, daß nach einer Messung die entsprechenden, schon gemessenen Reflexionen unberücksichtigt bleiben. Dadurch kann man gestaffelte Messungen durchführen.

Wenn man für den Ultraschallsender (1) eine feste Hochfrequenz von einem Frequenzgenerator (4) vorsieht, muß man sicherstellen, daß keine äußeren Einflüsse das Meßergebnis verfälschen. Wenngleich im kHz-Bereich selten Schallwellen erzeugt werden und diese Schallwellen meist eine sehr begrenzte Reichweite haben, so kann es doch zu einem fehlerhaften Meßverhalten der Ultraschall-Lageermittlungseinrichtung (15) kommen. Es gibt mehrere Methoden um sicherzustellen, daß die Messungen korrekt sind.

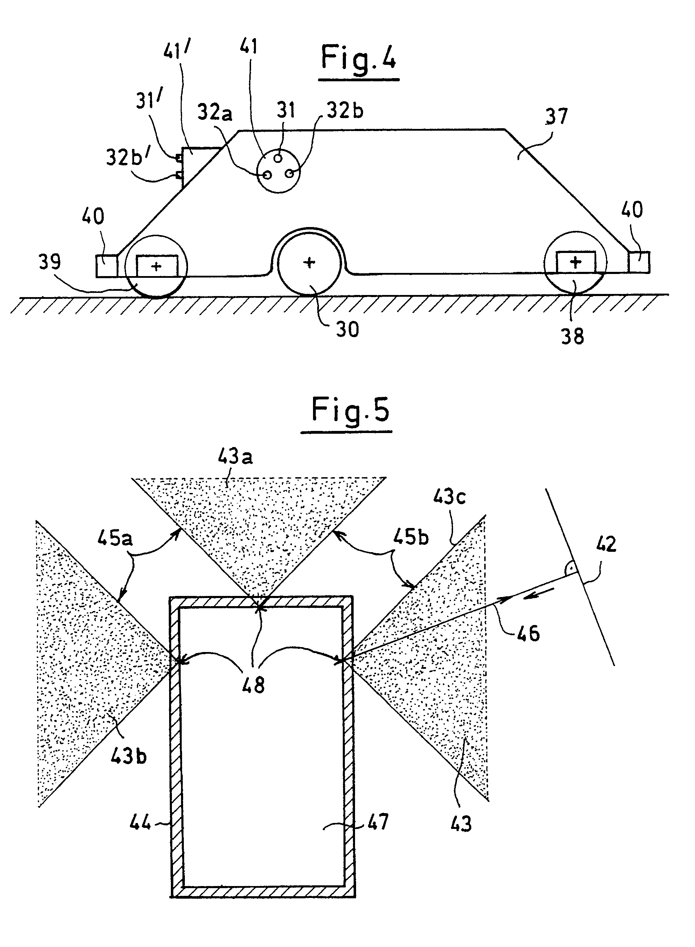

Eine Möglichkeit besteht darin, daß nicht nur eine Messung sondern mehrere identische Messungen durchgeführt werden. Indem man die aus der Auswerteeinrichtung (18) der Lageermittlungseinrichtung (15) kommenden Signale einem Computer (14) mit Speicher (Festplatte, Disk-Station, usw.) zuführt, kann man die notwendigen Lageberechnungen direkt in diesem Computer (14) durchführen. Die ermittelten Ergebnisse werden dann in einem Speicher z.B. RAM zwischengespeichert und mit den direkt darauf folgenden Messungen verglichen. Ergibt sich dabei eine signifikante, unerwartete Veränderung der Meßergebnisse, so kann ein Programm im Computer (14) gestartet werden, welches statt der berechneten Werte für ein Leitsystem (siehe Figur 4) eine Kontrolle veranlaßt (z.B. Halt des Fahrzeugs, Ermittlung der Entfernungen in verschiedenen Richtungen). Gegebenenfalls kann auch die Verarbeitung weiterer Signale anderer Sensoren (17) weitere entfernungsmessende Sensoren, Kollisionsverhinderungssensoren, Sensoren zur Messung der Umweltparameter, usw. erfolgen. Insbesondere Sensoren zur Ermittlung der relativen Fahrzeugbewegung als Positionsänderung in Längs- und Querrichtung (Lenkwinkelmeßsensor, Geschwindigkeitsmeßsensor, Wegstreckenmeßsensor,...) sind vorteilhaft, da deren Daten für eine Koppelnavigation verwendet werden können.

Eine einfache Verbesserung der in Figur 1 dargestellten Lageermittlungseinrichtung (15) können Frequenzfilter direkt hinter den beiden Ultraschallempfängern (9a,9b) sein, welche als Bandpaß wirken und sicherstellen, daß nur der ausgestrahlte Ultraschallimpuls (2) zu einer Messung beitragen kann.

Kann man nicht sicherstellen, daß der vom Frequenzgenerator (4) erzeugte und vom Ultraschallsender (1) ausgesandte Ultraschallempfängern (9a,9b) eine Messung auslöst (z.B. weil es eine Vielzahl von Ultraschallquellen mit nicht konstanter Frequenzabstrahlung gibt und kein Frequenzbereich mit Sicherheit ungestört ist), so ist dieses Problem nur dadurch lösbar, daß man die Frequenz des Frequenzgenerators (4) synchron mit dem Filterverhalten der beiden Bandpässe verändert. Dann wird eine definierte Anzahl von Messungen durchgeführt, die Messungen im Computer (14) verglichen und nur aus den nahe beieinanderliegenden Meßwerten ein Mittelwert gebildet, während die Extremwerte unbeachtet bleiben.

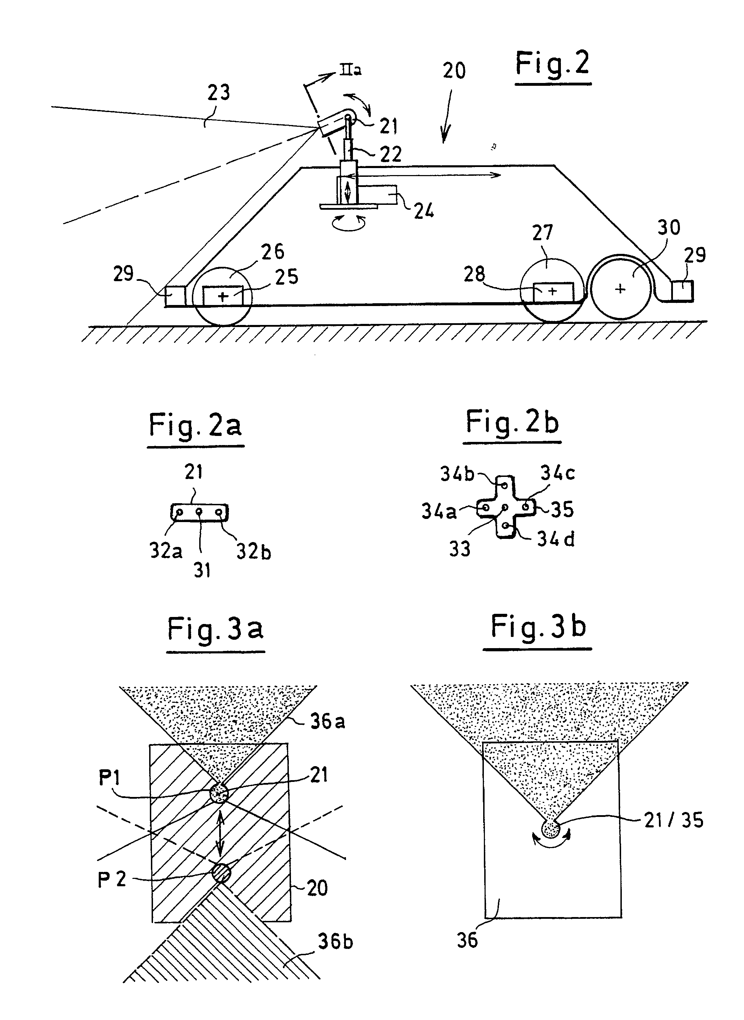

Die in Figur 1 beschriebene Ultraschall-Lageerkennungseinrichtung (15) ermöglicht es einem Fahrzeug (20 in Figur 2) seine Orientierung in einem zweidimensionalen Raum relativ zu einem Hindernis (7) sehr genau zu ermitteln. Dadurch ist das Fahrzeug (20) dann in der Lage, eine Navigation unter Berücksichtigung von Hindernissen (7) durchzuführen. Als Fahrzeuge (20), in welchen eine derartige Lageermittlungseinrichtung (15) eingebaut werden kann, kommen insbesondere autonombewegliche, führerlose Fahrzeuge (20) in Betracht, für welche sich, wie zum Stand der Technik beschrieben, immer mehr Arbeitsgebiete erschließen. Die detektierten Hindernisse (7) können dabei sowohl ortsfest als auch beweglich sein, was in einem Meßauswerteprogramm des Computers (14) ermittelt und dann bei der Steuerung des Fahrzeugs (20) berücksichtigt werden kann. Bei dem nun in Figur 2 gezeigten autonombeweglichen, führerlosen Fahrzeug (20) reicht eine einzige Ultraschall-Lageermittlungseinrichtung gemäß Figur 1 aus, um jederzeit jede für eine Navigation des Fahrzeugs (20) notwendige Messung vornehmen zu können.

Das Fahrzeug (20) hat ein, durch einen Motor (25) angetriebenes Frontrad (26) und zwei Hinterräder (27). An den Hinterrädern (27) sitzen Sensoren (28), welche die jeweilige zurückgelegte Wegstrecke jedes Hinterrades (27) messen. Um das Fahrzeug (20) herum ist ein Gummipuffer (29) als Kollisionsschutz angebracht. Hinter den Hinterrädern (27) befindet sich eine Reinigungsbürste (30), da das Fahrzeug (20) als Reinigungsroboter verwendet wird.

Der Ultraschallsender (31) und die beiden Ultraschallempfänger (32a,32b) (siehe Figur 2a) befinden sich in einem separaten Gehäuse (21), welches auf einem höhenverstellbaren, drehbaren Teleskoparm (22) kippbar angebracht ist. Je nachdem in welche Richtung sich das Fahrzeug (20) bewegt, kann das Gehäuse (21) auf dem Teleskoparm (22) in zwei definierte Endpositionen bewegt werden. Durch diese hohe Beweglichkeit des Gehäuses (21) können dann auch direkt vor dem Fahrzeug (20) Messungen erfolgen.

Der Öffnungswinkel der Strahlungskeule (23) beträgt in horizontaler Richtung ca. $\pm 45°$ und in vertikaler Richtung $\approx 50°$. Dadurch kann die Ultraschall-Lageerkennungseinrichtung (15) einen breiten Bereich vor dem Fahrzeug (20) einsehen, ohne daß unnötige Deckenreflexionen eliminiert werden müssen. Der Ultraschallsender (31) strahlt mit ca. 120 dB Schalldruck, wodurch eine ausreichend exakte Entfernungsermittlung bis ca. 6 m gegeben ist. Durch die dargestellte konstruktive Anbringung des Gehäuses (21) mit dem Ultraschallsender (31) und den beiden Ultraschallempfängern (32a,32b) kommt man mit nur einer Lageermittlungseinrichtung am Fahrzeug (20) aus und kann darauf verzichten, an verschiedenen Ecken und Seiten jeweils mindestens eine Einrichtung anzubringen. Wenngleich auch dies mit der in Figur 1 beschriebenen Lagermittlungseinrichtung möglich ist, so hat die ausgewählte konstruktive Lösung den Vorteil äußerster Flexibilität im Einsatz. Der vom Ultraschallsender (31) ausgestrahlte Ultraschallimpuls mit ca. 20 Perioden (siehe Erläuterungen zu Figur 1) wird an Hindernissen reflektiert und gelangt als Ultraschallecho auf die beiden Ultraschallempfänger (32a,32b), welche zu beiden Seiten des Ultraschallsenders (31) angeordnet sind (siehe Figur 2a). Die Signale dieser Empfangsechos werden dann der Auswerteeinrichtung zugeführt, welche eine Phasendifferenz- und Laufzeitmessung durchführt. Die aus diesen Messungen resultierenden Daten werden im Computer mit den entsprechenden Daten der Gehäusestellung (Endposition, Ausschubhöhe, Kippwinkel, Drehwinkel) je nach deren momentaner, vom Computer mit einem entsprechenden Programm eingestellten Parametern mathematisch verknüpft, um eine Lagebestimmung des Fahrzeugs (20) in einem zweidimensionalen Raum durchzuführen. Nachdem eine Lagebestimmung durchgeführt wurde, kann man das Gehäuse (21) durch die Verstellmotoren (24) im Raum bewegen, um auch seitliche Messungen durchzuführen und den Weg des Fahrzeugs (20) an Hand von nochmaligen Messungen der zurückgelegten Wegstrecke die Genauigkeit der erfolgten Messungen zu überprüfen. Die Ausstattung des Computers mit einem Dauerspeichermedium ermöglicht es, dem Fahrzeug (20) gewisse Vorinformationen über den relevanten zu befahrenden Raum (Ausdehnung, feste Hindernisse,...) vor Fahrtantritt mitzugeben, falls derartige Informationen vorhanden sind.

Außer der in Figur 2a dargestellten Anordnung des Ultraschallsenders (31) und der beiden Ultraschallempfänger (32a,32b) kann man auch die Anordnung in Fig. 2b verwenden, welche aus einem Ultraschallsender (33) und vier Ultraschallempfängern (34a-d) in einem Gehäuse (35) besteht. Mit dieser Anordnung ist es nicht nur möglich, den Abstand und den Winkel des Fahrzeuges (20) zu einem Hindernis im Raum festzustellen, sondern man kann auch mit nur einer Messung die Höhe des Hindernisses bestimmen. Diese Höhenmessung ergibt sich aus dem Abstand des Hindernisses und dem vertikalen Winkel. Dieser Winkel kann dann wieder mit entsprechender Genauigkeit aus einer Phasendiffernz-Messung zwischen dem vom oberen und unteren Ultraschallempfänger (34b,34d) empfangenen Ultraschallecho ermittelt werden.

In Figur 3a ist das führerlose Fahrzeug (20) in Aufsicht dargestellt. Das Gehäuse (21) mit dem Ultraschallsender und den Ultraschallempfängern kann je nach Fahrtrichtung in zwei Endpositionen (P1,P2) gefahren werden. In diesen Endpositionen (P1,P2) kann das Gehäuse (21) jeweils um einen Winkel von ca. 225° geschwenkt werden, bei einem Öffnungswinkel der Strahlungskeule (36a,36b) von ± 45°. Diese Endpositionen (P1,P2) und der Drehbereich sollten so ausgesucht werden, daß die Strahlungskeule (36a,36b) bis direkt vor das Fahrzeug (20) sehen kann und auch seitlich ein Überschneiden der Strahlungskeulen (36a,36b) in den beiden Endpositionen (P1,P2) des Gehäuses (21) noch innerhalb der Fahrzeuggeometrie erfolgt.

Erlaubt es der konstruktive Aufbau des Fahrzeuges (36), daß alle Seiten von der Mitte her abfallen, so kann das Gehäuse (21 oder 35) auch in der Mitte des Fahrzeuges (36) auf der sich ergebenden Seite angebracht werden (siehe Figur 3b). Dann braucht man bei einem Wechsel der Fahrtrichtung das Gehäuse (21,35) nicht mehr in verschiedene Positionen zu bewegen. In diesem Fall ist es sinnvoll, wenn sich das Gehäuse (21,35) ganz um seine vertikale Achse drehen kann.

In Figur 4 sind mehrere, nicht drehbare Lageermittlungseinrichtungen (41,41') sowohl seitlich als auch in Fahrtrichtung an dem Fahrzeug (37) angebracht. In Figur 4 ist dabei wegen der seitlichen Ansicht nur eine seitliche Lageermittlungseinrichtung (41) sowie die vordere Lageermittlungseinrichtung (41') zu sehen. Das dreirädrige Fahrzeug (37) mit einem Bugrad (39) und zwei Hinterrädern (38) hat im mittleren Bereich eine Reinigungseinrichtung (30) nach dem bekannten Stand der Technik. Um das Fahrzeug (37) herum befindet sich eine Stoßsicherung (40). Die Lageermittlungseinrichtung (41) selbst besteht aus nur einem Ultraschallsender (31) und zwei Ultraschallempfängern (32a,32b), welche aufgrund des Meßverfahrens benötigten kleinen Meßbasis nur einen geringen Abstand haben. (Dies insbesondere auch deshalb, weil die benötigte Meßgenauigkeit durch die Winkelempfindlichkeit des Verfahrens auch bei kleiner Meßbasis gut erreicht wird.) Entsprechend der seitlichen Lageermittlungseinrichtung (41) sind auch der Ultraschallsender (31') und die beiden Ultraschallempfänger (32b',32a' nicht sichtbar) der vorderen Lageermittlungseinrichtung (41') angeordnet. Damit eine eindeutige Zuordnung der erhaltenen Meßwerte zu einer Lageermittlungseinrichtung (41,41') vom Computer erfolgen kann, erfolgt eine Umschaltung zwischen den Lageermittlungseinrichtungen (41,41') durch den Computer.

In Figur 5 ist nun gezeigt, welche Bereiche (43) um das Fahrzeug (47) durch drei Lageermittlungseinrichtungen (48) mit einem Öffnungswinkel der Strahlungskeule (43a-c) von ≈ ± 45° kontrolliert werden können. Zwischen den Strahlungskeulen (43a-c) befinden sich nicht erfaßte Bereiche (45a,b), da nur eine minimale Wahrscheinlichkeit für ein aus dieser Richtung kommendes Hindernis, welches von sich aus nicht ausweicht, besteht. Um aber auch solche Kollisionen aus nicht überwachten Bereichen schadensmäßig zu begrenzen, ist um das Fahrzeug (47) eine Stoßsicherung (44) angebracht. Da der Ultraschallsender und die beiden Ultraschallempfänger der Lageermittlungseinrichtung sehr dicht beieinander angebracht sind, wird der ausgesandte Ultraschallimpuls (46) bei einem Auftreffen auf ein Hindernis (42) fast in sich selbst reflektiert. Dies ist die Konsequenz aus der dichten Anordnung des Ultraschallsenders und der Ultraschallempfänger, wobei der Winkel zwischen dem ausgestrahlten und reflektierten Ultraschallstrahl (46) relativ zum Hindernis (42) näherungsweise rechtwinklig ist.

**Patentansprüche**

1. Verfahren zur Ermittlung der Lage eines relativ zu einem Hindernis bewegten Objektes durch Messen von gegenseitigem Abstand und Winkellage unter Verwendung von Ultraschall, wobei die Abstandsmessung nach dem Laufzeitverfahren erfolgt, dadurch gekennzeichnet, daß zur Messung mindestens ein hochfrequenter Ultraschallimpuls ausgestrahlt und der vom Hindernis reflektierte Echoimpuls an mindestens zwei räumlich auseinanderliegenden Stellen des Objekts detektiert wird, und daß zur Winkelmessung die Phasendifferenz zwischen den beiden Echo-Signalen gemessen wird.

2. Verfahren nach Anspruch 1, dadurch gekennzeichnet,
daß die gewonnenen Meßwerte für Abstand und Winkel zur Navigation eines autonombeweglichen, führerlosen Fahrzeugs (20, 36, 37, 47) verwendet werden.

3. Verfahren nach Anspruch 1 oder 2, dadurch gekennzeichnet,
daß die Winkel- und Abstandsmessungen von bewegten bzw. beweglichen Objekten von einer festgelegten Meßposition aus erfolgen.

4. Einrichtung zur Durchführung des Verfahrens nach Anspruch 1, 2 oder 3, gekennzeichnet durch einen über einen Hochfrequenzgenerator (4) und einen, die Impulslänge festlegenden Fenstergenerator (6) angesteuerten Ultraschallsender (1, 31, 33), mindestens zwei räumlich auseinanderliegende Ultraschallempfänger (9a, 9b; 32a, 32b; 34a, 34c; 34b, 34d) sowie eine Phasenauswerteeinrichtung (12) zur Messung der Phasendifferenz zwischen den von den Empfängern (9a, 9b, 32a, 32b; 34a, 34c; 34b, 34d)
gelieferten Signalen oder zwischen den vom Ultraschallsender (1) ausgestrahlten Impulsen und dem von einem Empfänger (9a oder 9b) gelieferten Signalen.

5. Einrichtung nach Anspruch 4, dadurch gekennzeichnet, daß die Einrichtung an einem autonombeweglichen, führerlosen Fahrzeug (20, 36, 37, 47) angebracht ist.

6. Einrichtung nach Anspruch 4, dadurch gekennzeichnet, daß zumindest der Ultraschallsender (1, 31, 33) sowie die Ultraschallempfänger (9a, 9b; 32a, 32b; 34a, 34c; 34b, 34d) in einem zumindest eindimensional drehbaren Träger (21, 35) eines autonomen, fahrerlosen Fahrzeugs (20, 36) untergebracht sind.

7. Einrichtung nach Anspruch 4, dadurch gekennzeichnet, daß jeweils ein Ultraschallsender (31, 33) und zwei Ultraschallempfänger (34a - d) zusammen an mehreren Stellen eines autonomen, fahrerlosen Fahrzeugs (37) fest angebracht sind, wobei die Sender (31, 33) in unterschiedliche Richtungen ausstrahlen.

8. Einrichtung nach einem der Ansprüche 4 - 7, dadurch gekennzeichnet, daß die Ultraschall-Lageermittlungseinrichtung (15) mit der Steuerungseinrichtung des Fahrzeugs (20, 36, 37, 47) schaltungstechnisch direkt verbunden ist.

9. Einrichtung nach Anspruch 8, dadurch gekennzeichnet, daß zwischen Lageermittlungs- und Steuerungseinrichtung ein Rechner (14) angebracht ist, um die Meßwerte zu verarbeiten.

## Fig. 1

Fig.2

Fig.2a

Fig.2b

Fig.3a

Fig.3b

## Fig.4

## Fig.5